# EUROPEAN PATENT APPLICATION

(11) **EP 2 990 738 A1**
(43) Date of publication of application: **02.03.2016**
(21) Application number: 14788906.7
(22) Date of filing: 22.04.2014
(51) Int. Cl.: F24J 2/04, F24H 3/00, F24H 9/00

(54) **TUBE TYPE SOLAR AIR HEATER**

(30) Priority: 23.04.2013 KR 20130044703
(71) Applicant: Seo, Dong Jin, Seoul 136-785 (KR)
(72) Inventor: Seo, Dong Jin, Seoul 136-785 (KR)
(74) Representative: Gulde & Partner
(86) International application number: PCT/KR2014/003525
(87) International publication number: WO 2014/175645

(57) **Abstract**

The present invention relates to a tubular solar air heater, and more particularly, to a tubular solar air heater having a black hot air tube of a predetermined section into which cold air can be introduced formed at an inside of a tube which is formed transparently or semi-transparently, and allowing the cold air to be heated by solar heat in the hot air tube and discharged to the outside, thereby enabling radiant heating.

The present invention includes a tube main body formed of a transparent or semi-transparent material, and a hot air tube which is formed to be penetrated at an inner portion of the tube main body, has a black-colored surface or back surface, and allows the cold air to be introduced thereinto, heated by solar heat, and discharged to the outside.

## Description

### [Technical Field]

The present invention relates to a tubular solar air heater, and more particularly, to a tubular solar air heater having a black hot air tube of a predetermined section into which cold air can be introduced formed at an inside of a tube which is formed transparently or semi-transparently, and allowing the cold air to be heated by solar heat in the hot air tube and discharged to the outside, thereby enabling radiant heating.

### [Background Art]

The importance of alternative energy development is extremely increasing in terms of securing future energy sources and developing and utilizing eco-friendly energy resources for environmental protection, and for actively dealing with international environment-related treaties of Green Round (GR), Technology Round (TR), World Trade Organization (WTO), etc. Consequently, development and commercialization of a technology using unlimited, pollution-free solar energy among alternative energy resources are very urgent.

At present, humans on the earth are confronted with two issues that must be resolved.

The first issue is the depletion of fossil energy, such as oil and coal, used by the humans, and the second issue is the fulfillment of United Nations Framework Convention on Climate Change (UNFCCC) to prevent global warming due to the increase in use of fossil energy.

If the fossil energy, which was deemed by the humans as an endless resource, is continuously used in the current pace, oil, coal, natural gas, and uranium will be exhausted within 40 years, 210 years, 65 years and 50 years, respectively.

In resolving these difficult issues, clean alternative energy, so-called "future energy" or "green energy," is getting the spotlight, and accordingly, countries are hugely investing on the development and supply of the alternative energy.

The alternative energy may include solar light, solar heat, wind power control, geothermal heat, fuel cell, hydrogen energy, waste energy, etc., but the present invention focuses on the alternative energy in which the solar light and solar heat are used.

Since the sun has a surface temperature of about 6000 °C and core temperature of about 1.5×10 °C, it releases a huge amount of heat and light, and the amount is as much as 9.2×10²² kcal. However, since the earth is apart about 1.5×10⁸ km from the sun, the amount of solar radiant energy (solar constant) reaching the Earth is only about 2 cal.

The solar radiant energy not only is a source of energy required for our daily lives, but also serves as a driving force of various meteorological phenomena or oceanic current. Moreover, various apparatuses, which use the solar energy, which have been suggested so far include a solar cell, solar air heater, solar housing, solar furnace, solar power generator, etc.

Among those, the solar air heater is installed outdoors, includes a black-colored corrugated tube disposed in a zigzag shape, and is configured to heat air introduced into the corrugated tube by solar heat and introduce the air indoors.

However, the solar air heater had a complex manufacture process, and occupied a great volume due to the requirement of a large heat-collecting area, thereby being difficult to be installed when enough space is not secured.

In addition, since the corrugated tube was installed outdoors, it was difficult to prevent heat of the air heated in the corrugated tube from being released to the outside, thereby not heating efficiently.

Furthermore, the solar air heater is currently being installed only at residential facilities such as detached houses, and is actually impossible to be used in apartment buildings or multiplex housings since it is difficult to be installed outdoors.

Meanwhile, it was difficult to maintain, repair, and store the solar air heater in summer when heating is not required.

### [Disclosure]

### [Technical Problem]

The present invention has been devised to solve the above problems, and is directed to providing a tubular solar air heater having a black hot air tube of a predetermined section into which cold air can be introduced formed at an inside of a tube which is formed transparently or semi-transparently, and allowing the cold air in the hot air tube to be heated by solar heat and discharged to the outside, thereby enabling radiant heating.

### [Technical Solution]

To achieve the above technical problem, the present invention includes a tube main body formed of a transparent or semi-transparent material configured as an air heater, and having a hot air tube which is formed to be penetrated at an inner portion of the tube main body, has a black-colored surface or back surface, and when cold air is introduced into the hot air tube, allows the cold air to be heated by solar heat and discharged to the outside.

### [Advantageous Effects]

According to the present invention, first, a tubular solar air heater can be used indoors since it is formed with a relatively light material, and particularly, can be easily used even in multiplex housings such as apartment buildings by being attached to windows, thus being able to save energy, thereby improving economic feasibility.

Second, the tubular solar air heater can be easily stored and carried during an unused period such as summer since it can be folded and stored after the tube is deflated during the unused period such as summer.

Third, a usability of the solar air heater can be increased since it can be easily installed and removed and applied not only to housings but also to various locations such as general offices and restaurants.

### [Description of Drawings]

FIG. 1 is a perspective view illustrating an appearance of a tubular solar air heater of the present invention.
FIG. 2 is a rear perspective view of FIG. 1.
FIG. 3 is a perspective view illustrating a first modified embodiment of FIG. 1.
FIG. 4 is a rear perspective view of FIG. 3.
FIG. 5 is a perspective view illustrating a second modified embodiment of FIG. 1.
FIG. 6 is a rear perspective view of FIG. 5.

### [Modes of the Invention]

To achieve the above technical problem, the present invention includes a tube main body formed of a transparent or semi-transparent material configured as an air heater, and having a hot air tube which is formed to be penetrated at an inner portion of the tube main body, has a black-colored surface or back surface, and when cold air is introduced into the hot air tube, allows the cold air to be heated by solar heat and discharged to the outside.

In one embodiment, the hot air tube may further include a blowing fan coupled to one end portion thereof to allow hot air, which results from heating introduced cold air by solar heat, to be promptly discharged to the outside.

In one embodiment, the tube main body may further include an adhesive plate at a rear surface thereof to be attached and fixed to a window or smooth surface.

In one embodiment, the hot air tube may be formed in a straight tube shape, while two or more hot air tubes may be formed.

In one embodiment, the hot air tube may be formed in a zigzag shape, an air inlet may be formed at a lower portion of one side surface thereof, and an air outlet may be formed at an upper portion of the one side surface.

In one embodiment, the hot air tube may have an air inlet and air outlet formed at the opposite side of the adhesive plate, and the air inlet may be formed at a lower portion and the air outlet may be formed at an upper portion.

In one embodiment, the hot air tube may have an air suctioning fan coupled to the air inlet, and a blowing fan coupled to the air outlet.

To fully understand the present invention, preferred embodiments of the present invention will be described with reference to the accompanying drawings. The embodiments of the present invention may be modified in various ways, and the scope of the present invention may not be construed as being limited by the embodiments which are described in detail below. The present embodiments are provided to more fully describe the present invention to those of ordinary skill in the art. Therefore, shapes, etc. of elements in the drawings may be exaggerated to emphasize more precise description. It should be noted that same parts in each of the drawings may be represented by like reference numerals. In addition, detailed description of known functions and configurations that are deemed to make the gist of the present invention unnecessarily vague will be omitted.

Hereinafter, by describing the preferred embodiments of the present invention with reference to the accompanying drawings, a tubular solar air heater of the present invention will be described in detail.

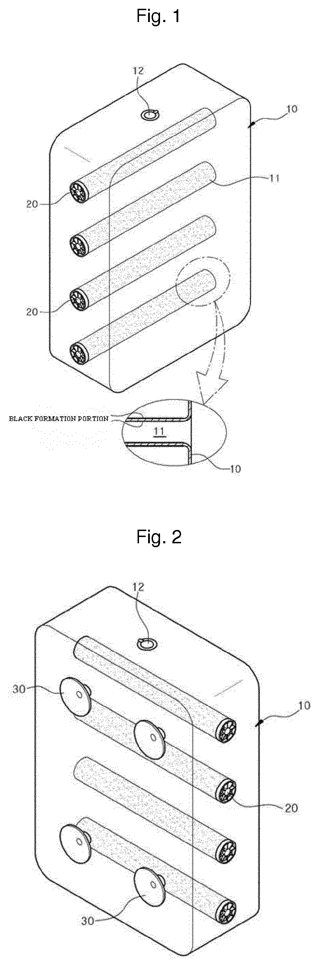

FIG. 1 is a perspective view illustrating an appearance of a tubular solar air heater of the present invention, and FIG. 2 is a rear perspective view of FIG. 1.

Referring to FIG. 1 and FIG. 2, a tubular solar air heater of the present invention includes a tube main body 10 formed of a transparent or semi-transparent material. The tube main body 10 is preferably formed of a transparent or semi-transparent synthetic resin material to allow the sunlight to be transmitted therethrough, and an inlet 12 for injecting air is formed at one side thereof. Although formed in a rectangular shape in the drawings, the tube main body 10 may be manufactured in various designs.

Meanwhile, a hot air tube 11 is formed to be penetrated at an inner portion of the tube main body 10. The hot air tube 11 is integrally formed with the tube main body 10, and a surface or back surface thereof is formed in black. This is to easily absorb the sunlight.

Meanwhile, as illustrated in FIG. 1 and FIG. 2, the hot air tube 11 may be formed in a rectangular shape, and two or more hot air tubes 11 may be formed. The number of the hot air tubes 11 may be proportionate to a size of the tube main body 10.

In addition, the tube main body 10 may further include an adhesive plate 30 at a rear surface thereof to be attached and fixed to a window or smooth surface. Consequently, the adhesive plate 30 is used to attach the tube main body 10 to an indoor glass window, and enable radiant heating by solar heat.

Meanwhile, the hot air tube 11 may further include a blowing fan 20 coupled to one end portion thereof to allow hot air, which results from heating introduced cold air by solar heat, to be promptly discharged to the outside. Consequently, the air heated through the hot air tube 11 may be easily discharged to the outside and the heated sate may be maintained.

Although the blowing fan 20 is illustrated in the drawings as being coupled to one side end of the hot air tube 11, a separate tube may be connected to the hot air tube 11 to introduce hot air indoors when an indoor space is far from a glass window.

Hereinafter, a first modified embodiment of the tubular solar air heater of the present invention will be examined.

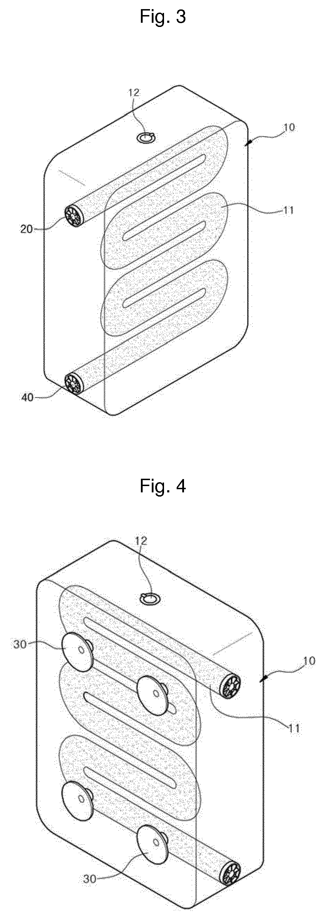

FIG. 3 is a perspective view illustrating a first modified embodiment of FIG. 1, and FIG. 4 is a rear perspective view of FIG. 3.

Referring to FIG. 3 and FIG. 4, a configuration of the first modified embodiment of the tubular solar air heater of the present invention is almost the same as that of the embodiment illustrated in FIG. 1 and FIG. 2.

However, the shape of the hot air tube 11 is formed in a zigzag shape. In addition, the air inlet and air outlet are formed on a side surface of the tube main body 10, while the air inlet is preferably formed on a lower portion thereof, and the air outlet is preferably formed on an upper portion thereof. This is to allow cold air to move upward along the hot air tube 11 while being heated since the cold air is positioned below due to a convection phenomenon.

Consequently, the blowing fan 20 is preferably coupled to an upper end portion of the hot air tube 11. Meanwhile, an air suctioning fan 40 may be further mounted on the air inlet formed at the lower portion of the hot air tube 11 to induce a smooth air flow.

Hereinafter, a second modified embodiment of the tubular solar air heater of the present invention will be examined.

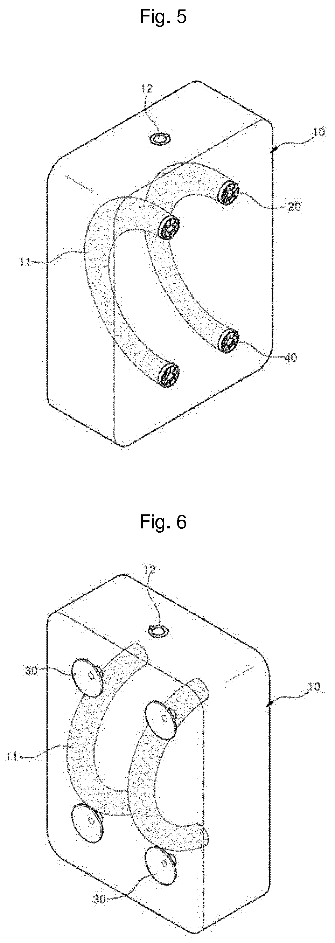

FIG. 5 is a perspective view illustrating a second modified embodiment of FIG. 1, and FIG. 6 is a rear perspective view of FIG. 5.

Referring to FIG. 5 and FIG. 6, a configuration of the second modified embodiment of the tubular solar air heater of the present invention is almost the same as that of the embodiment illustrated in FIG. 1 and FIG. 2.

However, the hot air tube 11 is configured to have the air inlet formed at a lower portion thereof and the air outlet formed at an upper portion thereof, while the air inlet and the air outlet are positioned at the opposite side of the adhesive plate 30.

Here, the blowing fan 20 is preferably coupled to the upper portion of the hot air tube 11. This is to allow cold air to move upward along the hot air tube 11 while being heated since the cold air is positioned below due to a convection phenomenon.

Meanwhile, the air suctioning fan 40 may be further mounted on the air inlet formed at the lower portion of the hot air tube 11 to induce a smooth air flow.

As mentioned above, the tubular solar air heater of the present invention can be used indoors since it is formed with a relatively light material, and particularly, can be easily used even in multiplex housings such as apartment buildings, thereby saving energy and heating costs.

In addition, the tubular solar air heater can be easily stored during an unused period such as summer since it can be folded and stored after the tube is deflated when not being used.

Therefore, since the solar air heater can be easily installed and removed, it can be applied not only to housings but also to various locations such as general offices and restaurants.

The embodiments of the tubular solar air heater of the present invention which have been described above are merely illustrative, and those of ordinary skill in the art to which the present invention pertains will be able to clearly understand that the embodiments may be modified in various ways and other equivalent embodiments are possible.

Therefore, those of ordinary skill in the art will be able to clearly understand that the present invention is not limited in forms mentioned in the detailed description. Consequently, the actual technical scope of the present invention should be defined by the technical spirit of the attached claims. In addition, the present invention should be construed as including the spirit of the present invention defined by the attached claims and all modifications, equivalents, and substitutes within the claims.

## Claims

1. A tubular solar air heater comprising:
a tube main body (10) formed of a transparent or semi-transparent material configured as an air heater; and
a hot air tube (11), which is formed to be penetrated at an inner portion of the tube main body (10), has a black-colored surface or back surface, and when cold air is introduced into the hot air tube (11), allows the cold air to be heated by solar heat and discharged to the outside.

2. The tubular solar air heater according to claim 1, wherein the hot air tube (11) further comprises a blowing fan (20) coupled to one end portion thereof to allow hot air, which results from heating introduced cold air by solar heat, to be promptly discharged to the outside.

3. The tubular solar air heater according to claim 1, wherein the tube main body (10) further comprises an adhesive plate (30) at a rear surface thereof to be attached and fixed to a window or smooth surface.

4. The tubular solar air heater according to claim 1, wherein the hot air tube (11) is formed in a straight tube shape, and two or more hot air tubes (11) are formed.

5. The tubular solar air heater according to claim 1, wherein the hot air tube (11) is formed in a zigzag shape, an air inlet is formed at a lower portion of one side surface thereof, and an air outlet is formed at an upper portion of the one side surface.

6. The tubular solar air heater according to claim 1, wherein the hot air tube (11) has an air inlet and air outlet formed at the opposite side of the adhesive plate (30), and the air inlet is formed at a lower portion and the air outlet is formed at an upper portion.

7. The tubular solar air heater according to claim 5 or claim 6, wherein the hot air tube (11) has an air suctioning fan (40) coupled to the air inlet, and a blowing fan (20) coupled to the air outlet.
